# EUROPÄISCHE PATENTANMELDUNG

(11) **EP 0 709 604 A1**
(43) Veröffentlichungstag der Anmeldung: **01.05.1996**
(21) Anmeldenummer: 95114280.1
(22) Anmeldetag: 12.09.1995
(51) Int. Cl.: F16J 15/08

(54) **Metallische Zylinderkopfdichtung**

(30) Priorität: 31.10.1994 DE 4438879
(71) Anmelder: GOETZE Payen GmbH, D-57562 Herdorf (DE)
(72) Erfinder: Lönne, Klaus, Dipl.-Ing., D-51399 Burscheid (DE); Papendorf, Jörg, Dipl.-Ing., D-51519 Odenthal-Glöbusch (DE)

(57) **Zusammenfassung**

Die Erfindung betrifft eine ein- oder mehrlagige metallische Zylinderkopfdichtung für Verbrennungskraftmaschinen mit Vorverbrennungskammer. Um den Wärmetransport von der Vorverbrennungskammer (5) auf die Sicke (7) zu verhindern, ist am Außenumfang (11) des Bauteils (4) eine Ausnehmung (10) in der Metallage (9) vorgesehen.

## Beschreibung

Die Erfindung betrifft eine ein- oder mehrlagige Zylinderkopfdichtung für Verbrennungskraftmaschinen mit Vorverbrennungskammer, wobei ein die Vorverbrennungskammer aufweisendes Bauteil in den Zylinderkopf eingebaut ist und im montierten Zustand der Dichtung mit einer Bodenfläche auf der Dichtung aufliegt, sowie mindestens einer außerhalb der Bodenfläche verlaufende, die Brennraumöffnung umschließende Sicke.

Zur besseren Durchmischung und damit zur besseren Verbrennung des Kraftstoffluftgemisches ist es insbesondere bei Dieselmotoren bekannt, dem eigentlichen Hauptverbrennungsraum eine Vorverbrennungskammer, Nebenkammer, Wirbelkammer oder Ricardokammer vorzuschalten. Solche Kammern müssen aus hochtemperaturfesten Materialien, wie Metallen oder auch Sinterkemraik, wie bevorzugt aus gesintertem Siliziumnitrid, gefertigt werden, und sie sind als separates Bauteil in eine entsprechende Ausnehmung des Zylinderkopfes eingesetzt. Die eingesetzten Vorverbrennungskammern liegen mit einem Teil ihrer Bodenfläche auf der Zylinderkopfdichtung auf.

Während des motorischen Betriebes erfolgt in der Vorverbrennungskammer eine starke Wärmeentwicklung, und die Bodenfläche der Kammer wird entsprechend stark aufgeheizt. Die Zylinderkopfdichtung muß daher im Auflagebereich der Kammer besonders geschützt werden.

Zur Verbesserung der Abdichtung im Bereich der Vorverbrennungskammer ist es aus der DE-PS 38 11 560 bekannt, in diesem Bereich mehrere Sicken radial hintereinander anzuordnen. Als Nachteil dieser Konstruktion erweist sich jedoch, daß unterhalb der Vorverbrennungskammer die Sicken unter hoher thermischen Belastung stehen mit der Folge, daß die Sicken heiß werden und so stark relaxieren, daß die notwendige Sickenpressung zur Abdichtung nicht gewahrleistet ist. Insbsondere bei Verwendung von Vorverbrennungskammern aus modernen keramischen Werkstoffen ist wegen der gegenüber mentallischen Vorverbrennungskammern weiter gestiegenen Temperaturen die Abdichtung noch schwieriger.

Nach beispielsweise der DE-PS 30 11 216 sind in der Zylinderkopfdichtung am Brennraumrand Aussparungen vorgesehen, so daß die Vorverbrennungskammer lediglich mit einer äußeren und weniger erhitzten Randzone auf der Zylinderkopfdichtung auf der metallischen Einfassung aufliegt. Diese Lösung kann aber auch nicht die Hitze von den Sicken fernhalten, darüber hinaus entsteht zugleich ein schädlicher freier Raum zum Brennraum.

Der Erfindung liegt die Aufgabe zugrunde, eine gattungsgemäße Zylinderkopfdichtung im Hinblick auf die thermische Belastung im Bereich der Vorverbrennungskammer zu verbessern.

Diese Aufgabe wird erfindungsgemäß dadurch gelöst, daß der Sicke im Bereich des Außenrandes des Bauteiles eine Ausnehmung vorgelagert ist, so daß der Wärmetransport in diesem Bereich vom Bauteil zur Sicke unterbunden ist. Die Abschirmung der Sicke über die Ausnehmung erzeugt in der Sicke eine geringere Temperaturbelastung. Die Relaxation der Sicke wird somit vermieden. Vorzugsweise ist die Ausnehmung ein dem Verlauf des Außenrandes folgender Schlitz mit einem Radius, der dem Radius des Außendurchmessers des Bauteiles entspricht. Einem weiteren Gedanken der Erfindung gemäß kann sich der Schlitz auch in den anderen, unter der mit der Bodenfläche korrespondierenden Metallage erstrecken, so daß der Wärmetransport zusätzlich erschwert wird.

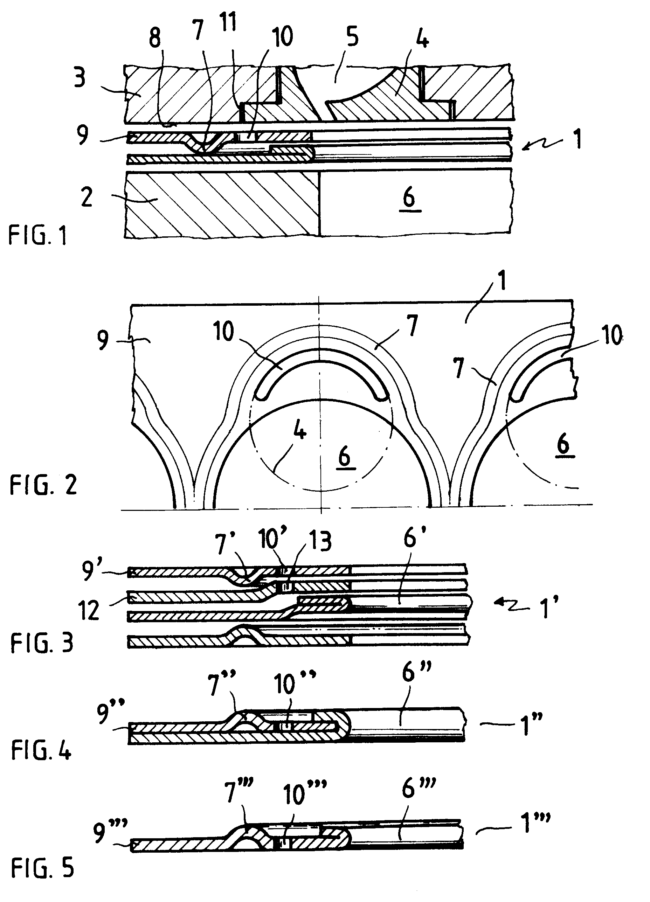

Die Erfindung wird anhand der Abbildungen naher erläutert, und zwar zeigen:
Figur 1 Teil einer Schnittansicht einer Brennkraftmaschine mit Vorverbrennungskammer und Zylinderkopfdichtung
Figur 2 Aufsicht auf eine Zylinderkopfdichtung im Bereich der Vorverbrennungskammer
Figur 3 eine alternative Zylinderkopfdichtung
Figur 4 eine weitere Ausführung der Zylinderkopfdichtung
Figur 5 eine weitere alternative Zylinderkopfdichtung
Die in der Figur 1 dargestellte Zylinderkopfdichtung (1) ist zwischen einem Zylinderblock (2) und einem Zylinderkopf (3) mit einem Bauteil (4), welches eine Vorverbrennungskammer (5) aufweist, eingebaut. Die Zylinderkopfdichtung (1) besteht aus einer ein- oder mehrlagigen Metallplatte, die im Bereich des Zylinderkopfes (3) eine Sicke (7) aufweist. Die Sicke (7) dient zur Abdichtung des Brennraumes (6).

Wie aus der Figur 2 ersichtlich, erstreckt sich die Sicke (7) geschlossen um den Brennraum (6). Damit diese Sicke (7) im Bereich der Vorverbrennungskammer (5) beziehungsweise im Bereich des Bauteiles (4) (Figur 2 gestrichelt dargestellt) nicht übermäßig erhitzt wird, ist in der mit der Bodenfläche (8) des Bauteiles (4) korrespondierenden Metallage (9) eine Ausnehmung (10) in Form eines Schlitzes vorgesehen. Der Schlitz erstreckt sich im Bereich des Außenumfanges (11) des Bauteiles (4) dem Verlauf des Bauteiles (4) folgend. Der Wärmetransport vom Bauteil (4) auf die Metallage (9) oder vom Brennraum (6) auf die Metallage (9) ist durch den Schlitz unterbrochen, wodurch die Sicke (7) geschützt ist. Die Länge und Breite des Schlitzes läßt sich je nach Anwendungsfall entsprechend variieren, ebenso kann eine zusätzliche Öffnung (13) auch in einer weiteren Metallage (12) vorgesehen sein (Figur 3), die entsprechend der Ausnehmung (10') ausgebildet ist.

Wie die Figuren 3 bis 5 zeigen, können ein- oder mehrlagige Zylinderkopfdichtungen (1, 1', 1'', 1''') zur Anwendung gelangen. Die Ausnehmungen (10, 10', 10'', 10''') unterbinden den Wärmetransport zur Sicke (7, 7', 7'', 7''').

## Patentansprüche

1. Ein- oder mehrlagige metallische Zylinderkopfdichtung für Verbrennungskraftmaschinen mit Vorverbrennungskammer, wobei ein die Vorverbrennungskammer aufweisendes Bauteil in den Zylinderkopf eingebaut ist und im montierten Zustand der Dichtung mit einer Bodenfläche auf der Dichtung aufliegt, sowie mindestens einer außerhalb der Bodenfläche verlaufende, die Brennraumöffnung umschließende Sicke, dadurch gekennzeichnet, daß die mit der Bodenfläche (8) in Kontakt stehende Metallage (9, 9', 9'', 9''') eine Sicke (7, 7', 7'', 7''') aufweist, daß der Sicke (7, 7', 7'', 7''') im Bereich des Außenrandes (11) des Bauteils (4) eine Ausnehmung (10, 10', 10'', 10''') vorgelagert ist, so daß der Wärmetransport in diesem Bereich vom Bauteil (4) zur Sicke (7, 7', 7'', 7''') unterbunden ist.

2. Zylinderkopfdichtung nach Anspruch 1, dadurch gekennzeichnet, daß die Ausnehmung (10, 10', 10'', 10''') ein bogenförmig sich ertsreckender Schlitz ist.

3. Zylinderkopfdichtung nach den Ansprüchen 1 und 2, dadurch gekennzeichnet, daß der Radius des Schlitzes dem Radius des Außendurchmessers des Bauteils (4) entspricht.

4. Zylinderkopfdichtung nach den Ansprüchen 1 bis 3, dadurch gekennzeichnet, daß der Schlitz sich auch in den unter der mit der Bodenfläche (8) korrespondierenden Metallage (9) angeordneten Metallagen (12) erstreckt.
